# EUROPÄISCHE PATENTANMELDUNG

(11) **EP 3 868 273 A1**
(43) Veröffentlichungstag der Anmeldung: **25.08.2021**
(21) Anmeldenummer: 21153370.8
(22) Anmeldetag: 26.01.2021
(51) Int. Cl.: A47L 15/00, D06F 34/05

(54) **SYSTEM UND VERFAHREN ZUR STEUERUNG VON HAUSGERÄTEN**

(30) Priorität: 20.02.2020 DE 102020104441
(71) Anmelder: Miele & Cie. KG, 33332 Gütersloh (DE)
(72) Erfinder: Rüther, Stefan, 33613 Bielefeld (DE); Werner, Kris, 33613 Bielefeld (DE); Stahl, Matthias, 33813 Oerlinghausen (DE)

(57) **Zusammenfassung**

Die Erfindung betrifft ein System zur Steuerung und Überwachung von mindestens einem Hausgerät oder von mehreren, miteinander in einem Verbund stehenden Hausgeräten. Insbesondere bezieht sich die Erfindung auf Hausgeräte wie Wäschebehandlungs- und Spülmaschinen, Bodenreinigungsgeräte, Gargeräte sowie Getränkebereiter u. dergl., bei denen zur Sicherstellung der Gerätefunktionen regelmäßige Wartungsroutinen erforderlich sind. Derartige Hausgeräte (1) sind in der Regel mit einer Steuerungsanordnung ausgebildet, welche mit einer Anzeigevorrichtung (21), in der betriebsbezogene und wartungsrelevante Informationen darstellbar sind, eine zentrale Steuereinheit (3) zur Steuerung des Gerätebetriebs sowie eine Steuerungs- und Überwachungseinrichtung (4) für die geräteinternen Bauteilkomponenten sowie der Betriebs- und Prozessabläufe im Gerät umfasst.

Gemäß der Erfindung ist bei einem derartigen Gerätesystem die Steuerungsanordnung des Hausgerätes (1) mit einem geräteinternen Assistenzsystem (5) und/oder einem externen Assistenz- und Kommunikationssystemen (7) steuerungstechnisch verbunden, wobei die Steuerungsanordnung des Gerätes derart konfiguriert und eingerichtet ist; dass in Verbindung mit dem Assistenzsystem (5) wartungsrelevante gerätespezifische Zustände und situativ bedingte und/oder persönliche Umstände des Benutzers erfasst, ausgewertet und miteinander abgeglichen werden, und dass davon abhängig für die Durchführung der jeweils anstehenden Wartungsmaßnahme ein gerätespezifisch definierter Zeitpunkt und/oder ein Zeitrahmen für die Durchführung der Wartungsroutine generiert und in der Anzeigevorrichtung (21) des Hausgerätes (1) darstellbar ist, bevor der endgültige Zeitpunkt für die jeweils zwingend erforderliche Wartung eingetreten ist und dem Benutzer angezeigt wird.

Dadurch wird der Vorteil erzielt, dass die Zuverlässigkeit des ungestörten Gerätebetriebs und der Bedienkomfort von Haushaltsgeräten im alltäglichen Gebrauch verbessert wird. Weiterhin wird die Durchführung von Wartungsroutinen planbar und muss nicht zu unpassenden Zeitpunkten erfolgen. Durch das geräteinterne Assistenzsystem (5) sowie einem externen Assistenz- und Kommunikationssystem (7) wird der Zeitpunkt der Wartungen auf die Bedürfnisse des Benutzers und seine individuelle Benutzungsroutine angepasst.

## Beschreibung

Die Erfindung betrifft ein System zur Steuerung von mindestens einem Hausgerät oder von mehreren Hausgeräten, insbesondere von Hausgeräten wie Wäschebehandlungs- und Spülmaschinen, Bodenreinigungsgeräte, Gargeräte sowie Getränkebereiter und dergleichen, bei denen zur Sicherstellung der Gerätefunktionen regelmäßige Wartungsroutinen erforderlich sind, wie die Wartung und Pflege gerätespezifischer Bauteilkomponenten, Nachfüllen von notwendigen Betriebs- und Behandlungsmitteln sowie Ersetzen von austauschfähigen Bauelementen und dergleichen, wobei die Hausgeräte eine Steuerungsanordnung aufweisen, die eine Bedien- und Anzeigeeinrichtung mit einer Anzeigevorrichtung zur Darstellung betriebsbezogener und wartungsrelevanter Informationen, eine zentrale Steuereinheit zur Steuerung des Gerätebetriebs sowie eine Steuerungs- und Überwachungseinrichtung für die geräteinternen Bauteilkomponenten sowie der Betriebs- und Prozessabläufe im Gerät umfasst.

Die Erfindung bezieht sich in erster Linie auf die heute in modernen Haushalten eingesetzten Wasch- und Geschirrspülmaschinen, Wäschetrockner, Staubsauger, Herde, Backöfen, Dampfgarer und Kaffeemaschinen. Bei all diesen Geräten stehen regelmäßig vom jeweiligen Gebrauch und von der Nutzungsdauer abhängige Wartungsroutinen an, um die ordnungsgemäße Funktionstauglichkeit des Gerätes aufrecht zu erhalten. Hierzu gehört u.a. das Reinigen oder der Austausch von Filterelementen, das Nachfüllen von Wasser in dafür vorgesehenen Vorratsbehältern, das Nachfüllen von notwendigen Behandlungs- und Betriebsmitteln sowie das Durchführen eines Entkalkungsvorgangs, wenn das Gerät mit aufgeheiztem Wasser betrieben wird zum Beispiel bei einem Dampfgarer oder einer Kaffeemaschine.

Bislang wird auf dem Gebiete der Hausgeräte die traditionelle Wartung in der Regel nur reaktiv verstanden, d.h. die Steuerungssoftware der Geräte ist derart vorprogrammiert, dass für den Benutzer ein Warnsignal oder eine Information im Gerätedisplay erst dann generiert wird, wenn eine Wartungs- und Pflegemaßnahme bereits zwingend durchzuführen ist oder auch bestimmte Behandlungsmittel nachzufüllen sind. In gleicher Weise wird erst reagiert, wenn das Gerät aufgrund der Umstände mangelnder Wartung und Pflege Fehler und Störungen meldet, so dass erst nach deren Behebung der Betrieb wieder aufgenommen bzw. fortgesetzt werden kann. Die reaktive Wartung lässt sich zwar mit den einschlägig bekannten Maßnahmen und Steuerungsmitteln sehr einfach implementieren, bietet oft aber Anlass für Verdruss beim Benutzer, wenn dabei die Unterbrechung eines Behandlungsvorgangs ausgelöst wird oder der übliche Gebrauch insbesondere zu unpassender Zeit nicht möglich ist.

Hierfür können nicht abschließend aber beispielhaft einige Fallsituationen angeführt werden. Viele der bekannten Hausgeräte, wie u.a. Wasch- und Spülmaschinen, Wäschetrockner und Staubsauger, sind mit diversen Filtersystemen ausgestattet, die regelmäßig gereinigt werden müssen, da ansonsten der Betrieb nicht fortgesetzt werden kann. Beispielsweise würde der Wäschetrockner seine Funktion verweigern, wenn der Flusenfilter sich zugesetzt hat und eine Reinigung zwingend notwendig ist.

Weiterhin sind die beim Waschen und Spülen eingesetzten Behandlungs- und Pflegemittel immer wieder nachzufüllen. Ebenso muss auch der Bohnenbehälter eines Kaffeeautomaten ständig wieder aufgefüllt werden. Deshalb ist hierfür immer ein entsprechender Vorrat bereitzuhalten oder muss neu beschafft werden.

Bei einem Dampfgarer erfolgt beispielsweise eine Anzeige der möglichen Anzahl von Garvorgängen, bevor zwingend ein Entkalkungsvorgang durchzuführen ist. Reicht der Wasserstand in einem Dampfgarer nicht für einen geplanten Garvorgang aus, kann der Garvorgang erst nach dem Nachfüllen von Wasser fortgesetzt werden.

Weiterhin wird bei den mit Wasser betriebenen Geräten (z.B. Kaffeeautomat, Dampfgarer) im Display immer eine oft mit einem akustischen Signal begleitete Meldung erfolgen, wenn der Wasserbehälter aufzufüllen ist, bevor das Gerät wieder in Betrieb genommen werden kann.

Auch wird es als nachteilig empfunden, wenn der Dampfgarer eine Entkalkung gerade in dem Moment fordert, wenn beispielsweise Milchreis für die Kinder bei einer Geburtstagsfeier serviert werden soll.

Der Dampfgarer weist zwar durch die Anzeige der restlichen Garvorgänge auf den anstehenden Entkalkungsvorgang hin, dies geschieht jedoch ab einem gewissen Schwellenwert bei jeder Nutzung und ist somit nicht nutzerfreundlich, eher nervig und nicht antizipativ auf einen geplanten Event ausgerichtet.

Ebenso wird bei einer Wasch- oder Spülmaschine beim Start des Programms eine Meldung erfolgen, wenn der Wasserzulauf nicht geöffnet ist. Bei einem Wasch- oder Spülprogramm mit Zeitvorwahl oder Fernstart würde dann aber der gewünschte Wasch- oder Spülbetrieb gar nicht erst durchgeführt werden können.

Noch ärgerlicher für den Nutzer ist das Versagen von Geräten in aufwändigeren, automatisierten oder teilautomatisierten Prozessen, wenn durch die Abwesenheit des Nutzers fehlende Maßnahmen am Gerät nicht bzw. zu spät erkannt werden und der Vorgang deshalb nicht zur Ausführung kommt.

Der bestimmungsgemäße Gebrauch der Geräte scheitert deshalb oft nicht an funktionsfähigen Hausgeräten, sondern weil die Steuerung den Betrieb unterbricht oder nicht erst anlaufen lässt, wenn zu unpassenden Zeitpunkten zunächst zwingend eine Wartungsmaßnahme durchgeführt werden muss. Dies erweist sich oftmals als sehr nachteilig und frustrierend.

Im Kontext der Industrie 4.0 wurde unter dem Schlagwort "Predictive Maintenance" (= "vorausschauende Wartung") bereits ein Themenkomplex bekannt, der demgegenüber einen vorausschauenden Ansatz verfolgt. Dieser zielt auf die Minimierung und effiziente Durchführung von Service-Einsätzen ab, so dass die Ausfallquote bzw. die Störung industrieller Produktionsanlagen möglichst gering gehalten und planbar wird. Im Kern dieser Verfahren geht es darum, möglichst frühzeitig auf Wartungsarbeiten und den verbrauchs- bzw. verschleißbedingten Austausch oder das Nachfüllen von Betriebsmitteln hingewiesen zu werden, bevor es zur Unterbrechung laufender Produktionsprozesse kommt.

Ziel der "Predictive Maintenance" ist es immer, die Maschinen und Anlagen proaktiv und vorausschauend zu warten, dass Ausfallzeiten minimiert und der Wartungsaufwand ebenfalls auf ein Minimum reduziert werden kann. Essentiell hierfür ist natürlich eine umfassende Datenerfassung in der Produktion. Im Grunde geht es bei der Predictive Maintenance darum, Messdaten aus Maschinen und Anlagen zu verwenden, um in Ableitung aus diesen Daten die Wartungsintervalle nach einer festgelegten Zeitdauer oder vom physischen Gebrauchszustand der einzelnen Bauteile und Maschinen bestimmen zu können.

Einige Maßnahmen und Konzepte der "Predictive Maintenance" lassen sich zwar auch auf Hausgeräte übertragen, jedoch ist aber auch bei der Anwendung der Grundsätze der Predictive Maintenance der Nachteil in Kauf zu nehmen, dass die Aufforderung zur Wartung oder zum Austausch von Bauteilen zu einem ungelegenen bzw. unpassenden Zeitpunkt erfolgt.

Vor dem Hintergrund des vorbeschriebenen Technikstandes stellt sich der Erfindung das Problem, die vorstehend dargelegten Nachteile zu vermeiden und die Steuerung für den Betrieb von Hausgeräten derart weiterzubilden, dass die anstehenden Wartungs- und Pflegeroutinen für den Benutzer nicht zu ungünstigen Zeiten durchgeführt werden müssen und es nicht zu Unterbrechungen im laufenden Betrieb kommt oder der Betrieb der Geräte gar nicht erst beginnen kann.

Erfindungsgemäß wird dieses Problem durch ein System zur Steuerung von mindestens einem Hausgerät mit den Merkmalen des Patentanspruchs 1 gelöst. Vorteilhafte Ausgestaltungen und Weiterbildungen der Erfindung ergeben sich aus den nachfolgenden Unteransprüchen. In Patentanspruch 11 und dem darauf rückbezogen Unteranspruch wird ein Verfahren zum Betreiben eines erfindungsgemäß ausgebildeten Gerätesystems angegeben.

Die Erfindung bezieht sich in erster Linie auf eine Steuerungskonzeption eines oder auch mehrerer Hausgeräte, bei denen zur Sicherstellung der Gerätefunktionen regelmäßige Wartungsroutinen erforderlich sind. Insbesondere ist diese Steuerungskonzeption für Wäschebehandlungs- und Spülmaschinen, Bodenreinigungsgeräte, Gargeräte sowie Getränkebereiter und dergleichen bestimmt, und zwar für alle Geräte, bei denen die regelmäßige Wartung und Pflege gerätespezifischer Bauteile sowie das Nachfüllen von notwendigen Betriebs- und Behandlungsmitteln und eine Reinigung von Filterelementen bzw. deren Austausch notwendig ist.

Die Erfindung betrifft in erster Linie die bekannten, in den Haushalten eingesetzten Hausgeräte, die mit einer Steuerungsanordnung ausgebildet sind, die üblicherweise eine Bedien- und Anzeigeeinrichtung, eine zentrale Steuereinheit zur Steuerung des Gerätebetriebs sowie eine Steuerungs- und Überwachungseinrichtung für die geräteinternen Bauteilkomponenten sowie der Betriebs- und Prozessabläufe im Gerät umfasst.

Die Erfindung zielt dabei in vorteilhafter Weise ganz allgemein darauf ab, anstehende Wartungsroutinen für den Benutzer planbar zu machen und dass anstelle eines festen Zeitpunktes für die Wartung ein variabler Zeitrahmen oder ein für den Benutzer günstiger Zeitpunkt vorgeschlagen wird, ohne dass es diesbezüglich zur Unterbrechung des laufenden Gerätebetriebs kommt oder der Betrieb des Gerätes nicht in Gang gesetzt werden kann.

In erfindungsgemäßer und vorteilhafter Ausführungsform ist die Steuerungsanordnung des Hausgerätes steuerungstechnisch mit einem geräteinternen Assistenzsystem verbunden, wobei die Steuerungsanordnung des Gerätes derart konfiguriert und eingerichtet ist, dass in Verbindung mit dem Assistenzsystem wartungsrelevante gerätespezifische Zustände und situativ bedingte und/oder persönliche Umstände des Benutzers erfasst, ausgewertet und miteinander abgeglichen werden, und dass davon abhängig für die Durchführung der jeweils anstehenden Wartungsmaßnahme ein gerätespezifisch definierter Zeitpunkt und/oder ein Zeitrahmen für die Durchführung der Wartungsroutine generiert und in der Anzeigevorrichtung des Hausgerätes darstellbar ist, bevor der endgültige Zeitpunkt für die jeweils zwingend erforderliche Wartung eingetreten ist und dem Benutzer angezeigt wird.

Hierzu werden in einer wesentlichen Weiterbildung der Erfindung für den Zeitpunkt und/oder den Zeitrahmen zur Durchführung anstehender Wartungsroutinen gerätespezifisch festgelegte Prioritäten und Zeitabschnitte definiert, die in der Steuerungssoftware des Assistenzsystems implementiert sind. Davon abhängig kann somit dem Benutzer ein günstiger und der augenblicklichen Situation angepasster Zeitpunkt für die anstehende Wartungsmaßnahme vorgeschlagen werden.

Eine zweckmäßige und bevorzugte Ausführungsform sieht vor, dass die Steuerungsanordnung des Hausgerätes über eine Schnittstelle mit externen Assistenz- und/oder Kommunikationssystemen signaltechnisch verbunden wird. Damit können außerhalb der geräteinternen Steuerung vorhandene, externe Assistenzsysteme wie zum Beispiel die Spracherfassung durch ein Mikrofon oder die Bilderfassung durch eine Kamera in die jeweilige Gerätesteuerung einbezogen werden.

Weiterhin können darüber bekannte Kommunikationssysteme wie ein Smartphone oder ein Tablet, ein Assistenzsystem für die Interaktionserfassung im Zusammenhang mit der Gerätebedienung, ein häusliches Smart-Home-System, und/oder ein Assistenz- und Kommunikationssystem verwendet werden, die durch das Internet, in einer Cloud oder durch ein autark vorhandenes Softwareprodukt zur Verfügung stehen. Dadurch wird in vorteilhafter Weise die Möglichkeit eröffnet, dass die Dienste des Cloud-Computing, im Internet zur Verfügung stehende Informationen und Apps sowie Downloads zusätzlicher Softwareprodukte genutzt werden können.

Die Steuerungsanordnung des Gerätes mit dem internen Assistenzsystem und damit in Verbindung stehende, externe Assistenz- und Kommunikationssysteme, werden in vorteilhafter Ausgestaltung zudem derart konfiguriert und aufeinander abgestimmt, dass situativ bedingte Umstände des Benutzers und/oder die von ihm ausgehenden Emotionen und/oder Interaktionen bei der Bedienung des Gerätes erfasst und für die Festlegung des Zeitrahmens oder für den konkreten Zeitpunkt der durchzuführenden Wartungsroutine berücksichtigt werden können.

In einer weiteren vorteilhaften Ausführungsform sind für die Hausgeräte gerätespezifisch individuelle und flexible Wartungsintervalle vorgesehen, indem angepasste Schwellenwerte gebildet werden, so dass eine anstehende Wartungsroutine nicht zu einem festen Zeitpunkt sondern in variablen und im Voraus bestimmbaren Zeitabschnitten erfolgen kann.

Wenn allein nur ein Hausgerät der vorbeschriebenen Art betrieben wird, kann sich eine Ausführungsform empfehlen, bei der die Steuerungsanordnung des Hausgerätes und insbesondere das geräteinterne Assistenzsystem mit einer zusätzlichen Software und Sensorik in Verbindung steht. So kann beispielsweise ein am Gerät oder in der Reichweite des Hausgerätes platziertes Bild- und/oder Spracherfassungssystem in die Steuerung des Gerätes eingebunden werden. In einer einfachen Anwendungsform kann hierzu ein Mikrofon oder eine Kamera am Gerät oder in der Nähe des Gerätes angeordnet werden. Damit können autark für das jeweilige Gerät Assistenzfunktionen bereitgestellt und genutzt werden, um wartungsrelevante und nutzungsabhängige Informationen zu erfassen und auszuwerten, um davon abhängig angepasste Zeitpunkte und Zeitrahmen für einen günstigen Wartungszeitpunkt zu ermitteln.

In einer zweckmäßigen Ausgestaltungsform ist in der Steuerungsanordnung des Hausgerätes, beispielsweise in der zentralen Steuereinheit oder dem geräteinternen Assistenzsystem eine Lernsoftware implementiert, mittels der ein auf den Benutzer und auf dessen Haushalt zugeschnittenes Nutzungs- und Haushaltsprofil angelegt wird, in denen individuelle Regeln für die Wartungsroutinen festgelegt werden können sind.

Neben dem maschinellen Lernen von günstigen Wartungsintervallfenstern, ist es von Vorteil, wenn die in einem Haushalt vorhandenen Hausgeräte in einem Verbund betriebenen und miteinander vernetzt werden. Dadurch wird es möglich, dass miteinander in Beziehung stehende Wartungsroutinen synchronisiert und aufeinander abgestimmt werden können.

So kann beispielsweise die Entkalkung des Dampfgarers mit der Pyrolyse des Backofens, dem Entkalken der Kaffeemaschine, dem Reinigen des Dunstabzugsfilters synchronisiert werden, und zwar idealerweise zu dem Zeitpunkt, an dem ohnehin die Küchenreinigung ansteht. Zusätzlich können beispielsweise die eingeplanten Benutzungszeiten des Staubsaugers als Indikator herangezogen werden.

Eine bevorzugte Ausführungsform für ein Verfahren zur Steuerung der Hausgeräte umfasst im Wesentlichen folgende Verfahrensschritte:
- Einschalten des Hausgerätes zur Durchführung eines bestimmungsgemäßen Behandlungsvorgangs;
- Erfassung und die Abfrage des aktuellen Gerätestatus hinsichtlich der für das Gerät vorgesehenen Wartungsroutinen durch die Steuerungs- und Erfassungseinrichtung;
- Auswertung des aktuell erfassten Wartungszustandes des Hausgerätes in dem geräteinternen Assistenz- und Kommunikationssystem und Abgleich mit den vom externen Assistenz- und Kommunikationssystem bereitgestellten Daten und Informationen über die aktuelle situative Situationslage des Benutzers;
- Ermittlung eines günstigen Zeitpunktes oder des zur Verfügung stehenden Zeitrahmens für die anstehende Wartungsmaßnahme durch das Assistenz- und Kommunikationssystem mit Hilfe einer Assistenzsoftware;
- Bereitstellung einer Anzeigeinformation über eine aktuell oder in Kürze anstehende Wartungs- oder Pflegemaßnahme und Darstellung in der Anzeigevorrichtung 21 des Gerätes;

In einer vorteilhaften Weiterbildung des Verfahrens ist vorgesehen, dass nach der Eingabe des vorgesehenen und zu einem späteren Zeitpunkt ablaufenden Betriebsprogramms ein Probelauf gerätespezifisch relevanter Funktionen initiiert wird, und dass für den Benutzer eine Information generiert wird, falls bei einer Störung der jeweiligen Gerätefunktion nicht der ordnungsgemäße Ablauf des Betriebsprogramms stattfinden kann.

Durch diese Ausgestaltung wird der Vorteil erzielt, dass zwingend erforderliche Funktionalitäten des Gerätes nach der Programmeingabe überprüft und der für einen späteren Zeitpunkt vorgesehene Betrieb des Gerätes überhaupt in Gang gesetzt werden kann. So könnte beispielsweise eine Wasch- oder Spülmaschine ein für einen späteren Zeitpunkt programmiertes Wasch- oder Spülprogramm nicht ausführen, wenn der Wasserzulauf noch geschlossen ist. In gleicher Weise würde ein Wäschetrockner oder ein Staubsauger nicht in Betrieb genommen werden, wenn der Luft- bzw. einer der Staubfilter völlig verstopft ist.

Durch die erfindungsgemäß offenbarte Lösung ergeben sich zusammengefasst folgende Vorteile:
Die Zuverlässigkeit des ungestörten Gerätebetriebs und der Bedienkomforts von Haushaltsgeräten im alltäglichen Gebrauch wird dadurch verbessert, dass die Durchführung von Wartungsroutinen planbar wird und nicht zu unpassenden Zeitpunkten erfolgen muss. Durch das geräteinterne Assistenzsystem und das externe Assistenz- und Kommunikationssystem wird der Zeitpunkt der Wartungen auf die Bedürfnisse des Benutzers und seine individuelle Benutzungsroutine angepasst.

Insbesondere wird die Verlässlichkeit von automatisierten und/oder assistierten sowie spontan geplanten Haushaltsprozessen im Geräteverbund in vorteilhafter Weise weitergebildet.

Es kann keine Funktionsverweigerung (aufgrund von notwendigen Wartungen) der Geräte zu ungünstigen Zeitpunkten durch die Flexibilisierung der Wartungszeitpunkte erfolgen.

Innerhalb des Geräteverbundes kann eine vorteilhafte Bündelung und ggf. Synchronisation der Gerätewartung und Beschaffung von Verbrauchsmaterialien herbeigeführt werden.

Eine Abstimmung der Gerätewartung kann auf die Zeitpunkte für die üblichen Haushaltsroutinen zugeschnitten werden, zum Beispiel wenn ein regelmäßiger Reinigungstag vorgesehen ist.

Als Nebeneffekt kann auch die Zufriedenheit des Kunden festgestellt werden und als Steuerungsparameter in den Geräteverbund einfließen, um kontinuierlich das Verhalten der Geräte zu verbessern.

Die notwendigen Wartungs-, Befüllungs- und Entleerungsroutinen können vor einem geplanten Prozess anhand einer automatisch generierten Checkliste entsprechend der zu erwartenden Events durchgeführt werden. Störende Zwischenfälle werden so vermieden bzw. ein reibungsloser Ablauf von u.a. assistierten und automatisierten Haushaltsprozessen wird zumindest aus technischer Sicht zuverlässig gewährleistet.

Ein Ausführungsbeispiel der Erfindung wird nachfolgend anhand der Zeichnungen rein schematisch beschrieben. Die Zeichnungen zeigen
Figur 1 in einem vereinfachten Blockschaltbild ein System zur Steuerung eines Hausgerätes,
Figur 2 in einem ebenfalls stark vereinfachten Ablaufdiagramm die Verfahrensschritte zur Steuerung des in Figur 1 angedeuteten Hausgerätes in einer erfindungsgemäßen Ausführungsform.

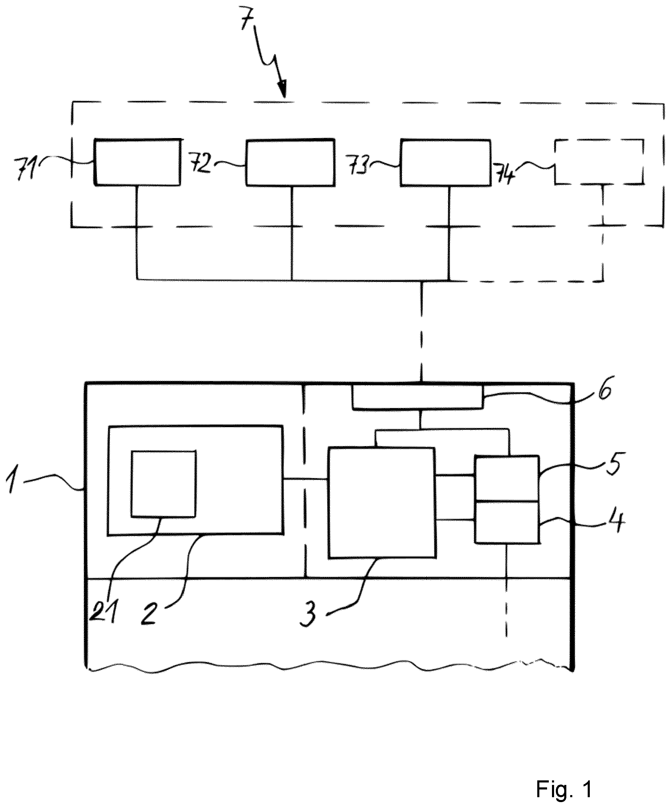

Die Figur 1 zeigt in symbolisierter Form ausschnittsweise ein Hausgerät 1 mit einer Steuerungsanordnung, von der in diesem Ausführungsbeispiel lediglich die zur Erläuterung der Erfindung wesentlichen Steuerungselemente dargestellt sind. Im Gerät selbst sind dies die üblicherweise vorhandene Bedien- und Anzeigeeinrichtung 2, die zentrale Steuereinheit 3 und die Steuerungs- und Überwachungseinrichtung 4 für die prozesseminenten Gerätefunktionen.

Das Hausgerät 1 kann beispielsweise ein Dampfgarer sein, bei dem die Bedien- und Anzeigeeinrichtung 2 mit einer Anzeigevorrichtung 21 beispielsweise in Form eines Touch-Displays ausgebildet ist. Die Steuereinheit 3 ist die zentrale Steuereinrichtung des Hausgerätes 1, die in der Regel als Computersteuerung ausgebildet ist und die die gerätespezifischen Steuerungs- und Ablaufprozesse steuert und überwacht.

Die Steuerungs- und Erfassungseinrichtung 4 ist dazu eingerichtet und konfiguriert, damit die gerätespezifischen Prozessabläufe und die regelmäßig erforderlichen Wartungsfunktionen überwacht werden. Dem Benutzer können hierzu wartungsrelevante Informationen und Hinweise im Anzeigedisplay der Anzeigevorrichtung 21 dargestellt werden. Bei einem Dampfgarer wird u.a. der Füllstand des Wasserbehälters für die Dampferzeugung sowie der Zeitpunkt für einen erforderlichen Entkalkungsvorgangs erfasst und überwacht sowie ein Hinweis in der Anzeigevorrichtung 21 generiert.

Zudem ist in die Steuerungsanordnung des Gerätes ein erfindungsgemäß vorgesehenes, geräteinternes Assistenzsystem 5 eingebunden, mittels dem die Erfassung, Verarbeitung und Auswertung von wartungsrelevanten Geräte- und Prozessdaten erfolgen kann. Weiterhin ist das Assistenzsystem 5 derart eingerichtet und konfiguriert, dass ein Abgleich und eine Auswertung dieser wartungsrelevanten Geräte- und Prozessdaten mit situativ und/oder persönlich bedingten Umständen seitens des Benutzers erfolgen kann und dass davon abhängig für die Durchführung der jeweils anstehenden Wartungsmaßnahme ein gerätespezifisch definierter Zeitpunkt und/oder ein Zeitrahmen für die Durchführung der Wartungsroutine generiert und in der Anzeigevorrichtung 21 des Hausgerätes 1 darstellbar ist.

Wie das in Figur 1 dargestellte Ausführungsbeispiel zeigt, kann die zentrale Steuereinheit 3 des Hausgerätes1 in zweckmäßiger Weise mit externen Assistenz- und Kommunikationssystemen 7 über die Schnittstelle 6 verbunden werden. Dies kann beispielsweise ein Smartphone oder Tablet 71, ein Assistenzsystem 72 für die Interaktionserfassung der Gerätebedienung durch den Benutzer oder auch ein im Haushalt vorhandenes Smart-Home-System 73 sein.

Das gestrichelt dargestellte Assistenzsystem 74 steht sinnbildlich für weitere mögliche Assistenzsysteme, die in die Steuerungsanordnung des Hausgerätes 1 eingebunden werden können. Zum Beispiel können als Assistenzsystem Softwareprodukte genutzt werden, die dazu geeignet und eingerichtet sind, um die von einer Bedienungsperson ausgehenden emotionalen Signale entschlüsseln, analysieren und auswerten zu können.

Weiterhin können hierüber Assistenzsysteme zugänglich gemacht werden, die im Internet, in einer Cloud oder in einem autark vorhandenen Softwareprodukt zur Verfügung stehen.

Somit besteht die Möglichkeit, über die externen Assistenz- und Kommunikationssysteme 7 u.a. eine Spracherfassung, eine Bilderfassung sowie eine Erfassungseinrichtung in die Steuerung des Hausgerätes 1 einbinden zu können, die benutzerrelevante Umstände und die Emotionslage des Benutzers analysieren und auswerten kann. Das Ergebnis wird dann dazu verwendet, um einen insgesamt von der Situationslage her günstigen Zeitpunkt für die anstehende Wartungsmaßnahme dem Benutzer empfehlen zu können.

Um den möglichen Zeitrahmen bzw. den konkret passenden Zeitpunkt für die eventuell anstehende Wartung vorschlagen zu können, werden für das jeweilige Gerät zeitlich priorisierte Zeitrahmen oder Zeitfenster in der Steuerungs- und Erfassungseinrichtung 4 oder im Assistenzsystem 5 angelegt.

Im Assistenzsystem 5 ist eine Software implementiert, mittels der die Steuerungsanordnung im Gerät mittels eines lokal ausgerichteten Funknetzes über die angedeutete Schnittstelle 6 des Gerätes mit extern vorhandenen Erfassungs- und Assistenzsystemen signaltechnisch in Verbindung treten kann. So kann über diesen Signalweg zusätzliche Sensorik oder Assistenzsoftware in die Gerätesteuerung eingebunden werden. So kann zum Beispiel ein am oder in der Nähe des Hausgerätes platziertes Mikrofon zur Spracherfassung oder eine Kamera für die Bilderfassung genutzt werden, um Informationen über das Verhalten und Agieren des Benutzers während der Gerätebedienung generieren zu können.

So kann zum Beispiel bei einem Kaffeeautomaten für das routinemäßige Befüllen des Wasserbehälters und das Entleeren des Tresterbehälters ein Zeitrahmen von 0,5 - 12 Stunden vor einem bevorstehenden Event, einer Party oder dergl. festgelegt werden, innerhalb dessen die nächste anstehende Wartung zu erfolgen hat.

Durchzuführende Pflegeroutinen wie das Entkalken und Reinigen des wasserführenden Systems bei einem Hausgerät wie beispielsweise u.a. einem Dampfgarer, einem Kaffeeautomaten und einer Waschmaschine können demgegenüber mit einem Zeitrahmen von einem Tag belegt werden.

Für die Beschaffung und den Kauf von Verbrauchsmaterialien wie Entkalkungstabletten, Wasch- und Pflegemittel sowie für den Ersatzbedarf zum Beispiel von Filtern und Staubbeuteln für Staubsauger kann demgegenüber ein längerer Zeitrahmen von 2 oder mehr Tagen vorgesehen werden.

Um die Hausgeräte für flexible Wartungsintervalle auszulegen können zum Beispiel Reserven bzw. angepasste Schwellenwerte für Wasser, Bohnen, Entkalkung, Waschmittel etc. gebildet werden. Dadurch kann der ungestörte Betrieb und die Wartung flexibilisiert und Meldungen ggf. hinausgezögert werden, bevor dem Benutzer hierfür dann ein passender Zeitpunkt angezeigt werden kann.

Durch die Nutzung externer Assistenz- und Kommunikationssysteme 7 und mit der von diesen zusätzlich bereitgestellten Sensorik und Software wie u.a. einem Anwesenheitsdetektor sowie einem Emotions- oder Frustrationsdetektor via Kamera und/oder Mikrofon, einer kalendarischen Terminüberwachungs- und Aufgabensoftware, bieten sich zahlreiche Möglichkeiten, um die anstehenden Wartungsmaßnahmen besser auf die situative Lage und die Bedürfnisse des Benutzers anpassen zu können.

Mit Hilfe einer Lernsoftware können auch eine Reihe von Vorteilen dadurch erzielt werden, bei denen die Wartung der Geräte z.B. durch einfache Statusabfragen gebündelt und synchronisiert werden. Dies kann durch folgende Fallbeispiele beispielhaft verdeutlicht werden:
Über die Smart-Home-Sensorik, deren Annährungssensoren und/oder deren Sprachassistenten, wird festgestellt, dass viele Leute anwesend sind. Daraus kann auf einen unpassenden Wartungszeitpunkt geschlossen werden.

Durch die Vernetzung mit einem Staubsauger wird festgestellt, dass gerade in der Wohnung die Bodenreinigung durchgeführt wird, was für den Benutzer auch einen günstigen Zeitpunkt für die Gerätewartung bedeuten könnte.

Durch Abgleich mit dem Kalender können dem Kunden Wartungsroutinen für die Geräte vorgeschlagen werden. Dabei werden alle Gerätewartungsaufgaben aggregiert bzw. synchronisiert und mit personenbezogenen Einträgen im Kalender auf Kompatibilität für Pflege- und Servicearbeiten sowie für die Beschaffung von Behandlungsmitteln oder Austauschteilen abgeglichen.

Durch die Einbindung der Gerätesteuerungen im Geräteverbund wird zum Beispiel erkannt, dass gerade gekocht wird. Für einen Zeitraum von ca. 2 Stunden nach dem Kochen ist die Wahrscheinlichkeit hoch, das Wartungsintervalle ungünstig sind, da zum Beispiel nach dem Essen mehrere Espresso im Kaffeeautomaten gezogen werden.

Aus der Gerätenutzungshistorie und Angaben des Nutzers kann ein Profil abgeleitet werden, das mithilfe von Machine-Learning geeignete Zeitfenster für Wartungsintervalle ermittelt. Dabei kann zum Beispiel das Fluchen des Benutzers, seine Frustgebärden oder das Abbrechen der Gerätebedienung als Indikator für einen schlechten Zeitpunkt als Trainingsdaten für das Machine-Learning genutzt werden

Eine semantische Analyse von Kalendereinträgen mittels Natural Language Processing bezogen auf vorhandene vernetzte Haushaltsgeräte sowie deren Gerätefunktionen kann ebenfalls als Indikator für das Einplanen eines günstigen Wartungszeitpunktes dienen.

Die vorstehend beschriebenen Anwendungsbeispiele sind nicht abschließend zu verstehen. Es ergeben sich natürlich eine Vielzahl naheliegender Anwendungsvarianten für alle in einem Haushalt betriebenen Hausgeräten, bei denen der Grundgedanke der Erfindung realisiert werden kann.

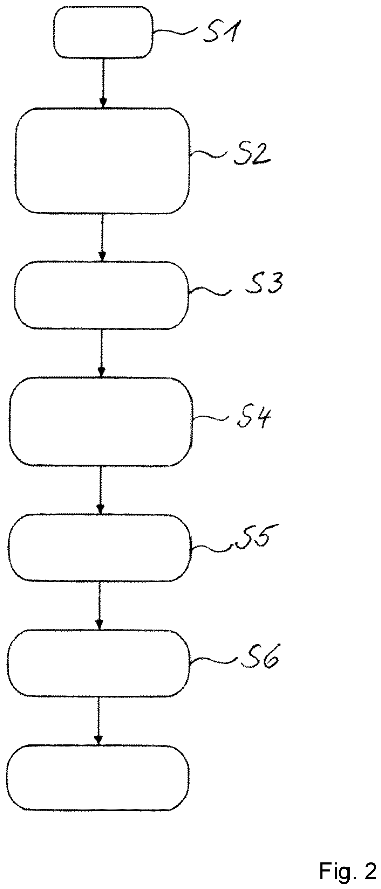

Bei dem in Figur 2 skizzierten Ablaufdiagramm sind die Verfahrensschritte für eine mögliche Ausführungsform der Erfindung in einer vereinfachten Form dargestellt.

Der Ablauf des hier aufgeführten Steuerungs- und Überwachungsverfahrens beginnt im Schritt S1 mit dem Einschalten des Hausgerätes 1 zur Durchführung eines bestimmungsgemäßen Behandlungsvorgangs.

Im Schritt S2 erfolgt zunächst die Erfassung und die Abfrage des aktuellen Gerätestatus hinsichtlich der für das Gerät vorgesehenen Wartungsroutinen. Beispielsweise überwachen die Geräte ihre internen Zähler und Status für Service- und Wartungsintervalle.

Im Schritt S3 wird der aktuell erfasste Wartungszustand dem in die Gerätesteuerung eingebundenen Assistenzsystem 5 zur Auswertung zugeleitet. Die Status der Geräte werden gesammelt und aggregiert.

Im Schritt S4 erfolgt über die externen Assistenz- und Kommunikationssysteme 7 die Erfassung und der Abgleich mit der situativen Lage beim Benutzer, zum Beispiel:
seine Termine, kalendarisch eingetragene Aufgaben und Aktivitäten, Anwesenheit und/oder auch der emotionale Zustand des Benutzers.

Durch Nutzung Künstlicher Intelligenzsysteme (KI), beispielsweise eines Reasoningverfahrens (CBR = case based reasoning), wird im Schritt S5 durch das Assistenzsystem 5 der günstige Zeitpunkt oder der zur Verfügung stehende Zeitrahmen für die anstehende Wartungsmaßnahme ermittelt.

Schließlich wird mit dem aus Schritt 5 ermittelten Ergebnis im Schritt S6 eine Anzeigeinformation über eine aktuell oder in Kürze anstehende Wartungs- oder Pflegemaßnahme generiert, die in der Anzeigevorrichtung 21 des Gerätes dargestellt wird.

Durch den Inhalt der Anzeigeinformation kann dem Benutzer in zweckmäßiger Weise der Hinweis über einen in der Zukunft liegenden Zeitpunkt für eine zwingend durchzuführende Wartungs- oder Pflegeroutine vermittelt werden. Somit kann sich der Benutzer rechtzeitig darauf einrichten und der Gerätebetrieb muss nicht zur unpassenden Zeit unterbrochen oder gar verhindert werden.

Die vorbeschriebene Anzeigeinformation kann den Benutzer im gleichen Zusammenhang auch auf die Beschaffung neuer Behandlungsmittel oder Austauschteile hinweisen.

### Bezugszeichenliste

- 1.: Hausgerät (Dampfgarer)
- 2.: Bedien- und Anzeigeeinrichtung
21 Anzeigevorrichtung/Display
- 3.: Steuereinheit
- 4.: Steuerungs- und Überwachungseinrichtung
- 5.: Assistenzsystem, geräteintern
- 6.: Schnittstelle
- 7.: Assistenz- und/ Kommunikationssysteme, extern
71 Smartphone/Tablet
72 Assistenzsystem für Interaktionserfassung
73 Smart-Home-Assistenzsystem
74 Assistenzsysteme, sonstige (Cloud/Internet/Softwareprodukte)

## Patentansprüche

1. System zur Steuerung und Überwachung von mindestens einem Hausgerät, insbesondere von Hausgeräten wie Wäschebehandlungs- und Spülmaschinen, Bodenreinigungsgeräten, Gargeräten sowie Getränkebereitern, bei denen zur Sicherstellung der Gerätefunktionen regelmäßige Wartungsroutinen erforderlich sind, wie die Wartung und Pflege gerätespezifischer Bauteilkomponenten, Nachfüllen von notwendigen Betriebs- und Behandlungsmitteln sowie Ersetzen von austauschfähigen Bauelementen, wobei die Hausgeräte (1) mit einer Steuerungsanordnung ausgebildet sind, die eine Bedien- und Anzeigeeinrichtung (2) mit einer Anzeigevorrichtung (21), in der betriebsbezogene und wartungsrelevante Informationen darstellbar sind, eine zentrale Steuereinheit (3) zur Steuerung des Gerätebetriebs sowie eine Steuerungs- und Überwachungseinrichtung (4) für die geräteinternen Bauteilkomponenten sowie der Betriebs- und Prozessabläufe im Gerät umfasst,
**dadurch gekennzeichnet,**
**dass** die Steuerungsanordnung des Hausgerätes (1) mit einem geräteinternen Assistenzsystem (5) steuerungstechnisch verbunden ist, wobei die Steuerungsanordnung des Gerätes derart konfiguriert und eingerichtet ist;
**dass** in Verbindung mit dem Assistenzsystem (5) wartungsrelevante gerätespezifische Zustände und situativ bedingte und/oder persönliche Umstände des Benutzers erfasst, ausgewertet und miteinander abgeglichen werden,
und **dass** davon abhängig für die Durchführung der jeweils anstehenden Wartungsmaßnahme ein gerätespezifisch definierter Zeitpunkt und/oder ein Zeitrahmen für die Durchführung der Wartungsroutine generiert und in der Anzeigevorrichtung (21) des Hausgerätes (1) darstellbar ist, bevor der endgültige Zeitpunkt für die jeweils zwingend erforderliche Wartung eingetreten ist und dem Benutzer angezeigt wird.

2. System zur Steuerung von Hausgeräten nach Anspruch 1,
**dadurch gekennzeichnet,**
**dass** für den Zeitpunkt und/oder den Zeitrahmen zur Durchführung anstehender Wartungsroutinen gerätespezifisch festgelegte Prioritäten und Zeitabschnitte definiert werden, die in der Software des Assistenzsystems (5) implementiert sind.

3. System zur Steuerung von Hausgeräten nach Anspruch 1 oder 2,
**dadurch gekennzeichnet,**
**dass** die Steuerungsanordnung des Hausgerätes (1) über eine Schnittstelle (6) mit einem externen Assistenz- und/oder Kommunikationssystem (7) signaltechnisch verbunden ist.

4. System zur Steuerung von Hausgeräten nach Anspruch 3,
**dadurch gekennzeichnet,**
**dass** die Steuerungsanordnung des Gerätes und das Assistenz- und/oder Kommunikationssystem (7) derart konfiguriert und eingerichtet sind, dass vom Benutzer ausgehende Emotionen und/oder Interaktionen bei der Bedienung des Gerätes erfasst und für die Festlegung des Zeitpunktes und/oder den Zeitrahmen für die Durchführung anstehender Wartungsroutinen berücksichtigt werden.

5. System zur Steuerung von Hausgeräten nach einem oder mehreren der Ansprüche 1 bis 4,
**dadurch gekennzeichnet,**
**dass** für die Hausgeräte gerätespezifisch individuelle und flexible Wartungsintervalle vorgesehen sind, indem angepasste Schwellenwerte gebildet werden, so dass eine anstehende Wartungsroutine nicht zu einem festen Zeitpunkt sondern in den variablen Zeitabschnitten eines festgelegten Zeitfensters erfolgt.

6. System zur Steuerung von Hausgeräten nach einem oder mehreren der Ansprüche 1 bis 5,
**dadurch gekennzeichnet,**
**dass** als Assistenz- und Kommunikationssystem (7) für die Verbindung mit der Steuerungsanordnung des Hausgerätes (1) ein Smartphone oder ein Tablet (71), ein Assistenzsystem (72) für die Interaktionserfassung im Zusammenhang mit der Gerätebedienung, ein häusliches Smart-Home-System (73), und/oder ein Assistenz- und Kommunikationssystem (74) verwendet wird, welches durch das Internet, in einer Cloud oder durch ein autark vorhandenes Softwareprodukt zur Verfügung steht.

7. System zur Steuerung von Hausgeräten nach einem oder mehreren der Ansprüche 1 bis 6,
**dadurch gekennzeichnet,**
**dass** in der Steuerungsanordnung des Hausgerätes (1) eine Lernsoftware implementiert ist, mittels der ein auf den Benutzer und auf dessen Haushalt zugeschnittenes Nutzungs- und Haushaltsprofil angelegt wird,
in denen individuelle Regeln für die Wartungsroutinen angelegt werden.

8. System zur Steuerung von Hausgeräten nach einem oder mehreren der Ansprüche 1 bis 7,
**dadurch gekennzeichnet,**
**dass** die Steuerungsanordnung eines Hausgerätes (1) mit einer zusätzlichen Software und Sensorik in Verbindungsteht, mittels der autark für das jeweilige Gerät Assistenzfunktionen bereitgestellt werden, um wartungsrelevante und nutzungsabhängige Informationen zu erfassen und auszuwerten.

9. System zur Steuerung von Hausgeräten nach einem oder mehreren der Ansprüche 1 bis 8,
**dadurch gekennzeichnet,**
**dass** die in den externen Assistenz- und Kommunikationssystemen (7) implementierte Sensorik und Funktionalitäten genutzt wird, um wartungsrelevante Informationen zu erfassen und auswerten zu können.

10. System zur Steuerung von Hausgeräten nach einem oder mehreren der Ansprüche 1 bis 9,
**dadurch gekennzeichnet,**
**dass** die in einem Haushalt vorhandenen Hausgeräte miteinander vernetzt sind und in einem Geräteverbund stehen, und dass miteinander in Beziehung stehende Wartungsroutinen synchronisiert und aufeinander abgestimmt werden.

11. Verfahren für ein System zur Steuerung von Hausgeräten, welches mit den Merkmalen nach einem oder mehreren der Ansprüche 1 bis 10 ausgebildet ist,
**gekennzeichnet durch** folgende Verfahrensschritte:
- Einschalten des Hausgerätes (1) zur Durchführung eines bestimmungsgemäßen Behandlungsvorgangs;
- Erfassung und die Abfrage des aktuellen Gerätestatus hinsichtlich der für das Gerät vorgesehenen Wartungsroutinen **durch** die Steuerungs- und Erfassungseinrichtung (4);
- Auswertung des aktuell erfassten Wartungszustandes des Hausgerätes (1) in dem geräteinternen Assistenzsystem (5) und Abgleich mit den vom externen Assistenz- und/oder Kommunikationssystem (7) bereitgestellten Daten und Informationen über die aktuelle situative Situationslage des Benutzers;
- Ermittlung eines günstigen Zeitpunktes oder des zur Verfügung stehenden Zeitrahmens für die anstehende Wartungsmaßnahme **durch** das Assistenz- und Kommunikationssystem (5) mit Hilfe einer Assistenzsoftware;
- Bereitstellung einer Anzeigeinformation über eine aktuell oder in Kürze anstehende Wartungs- oder Pflegemaßnahme und Darstellung in der Anzeigevorrichtung (21) des Gerätes.

12. Verfahren für ein System zur Steuerung von Hausgeräten nach Anspruch 11,
**dadurch gekennzeichnet,**
**dass** nach der Eingabe des vorgesehenen und zu einem späteren Zeitpunkt ablaufenden Betriebsprogramms ein Probelauf gerätespezifisch relevanter Gerätefunktionen initiiert wird, und dass für den Benutzer eine Information generiert wird, falls bei einer Störung der jeweiligen Gerätefunktion der ordnungsgemäße Ablauf des Betriebsprogramms nicht stattfinden kann.
